# EUROPEAN PATENT APPLICATION

(11) **EP 4 813 786 A1**
(43) Date of publication of application: **30.09.2026**
(21) Application number: 24907663.9
(22) Date of filing: 07.08.2024
(51) Int. Cl.: B60W 50/00, B60R 16/023

(54) **SIGNAL PROCESSING DEVICE AND VEHICLE CONTROL DEVICE INCLUDING SAME**

(30) Priority: 21.12.2023 KR 20230188753
(71) Applicant: LG Electronics Inc., Yeongdeungpo-gu Seoul 07336 (KR)
(72) Inventor: HAN, Dongwoo, Seoul 06772 (KR); KIM, Woosung, Seoul 06772 (KR); YU, Ganghee, Seoul 06772 (KR)
(74) Representative: Vossius & Partner Patentanwälte Rechtsanwälte mbB
(86) International application number: PCT/KR2024/011670
(87) International publication number: WO 2025/135377

(57) **Abstract**

A signal processing device and a vehicle control device including the same according to an embodiment of the present disclosure include: a first processor configured to exchange data with an external zonal signal processing device; a second processor configured to control a display; and a storage device including a plurality of namespaces, wherein the first processor is configured to control the zonal signal processing device to access a shared area or a shared namespace using Non-Volatile Memory Express based on Transport Control Protocol (NVMe/TCP). Accordingly, it is possible to efficiently operate a mass storage device in a vehicle.

## Description

### BACKGROUND

### 1. Technical Field

The present disclosure relates to a signal processing device and a vehicle control device including the same, and more particularly to a signal processing device capable of efficiently operating a mass storage device in a vehicle.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The vehicle internal signal processing device receives sensor data from various vehicle internal sensor devices and processes the received sensor data.

Meanwhile, the types and number of sensors mounted in the vehicle sharply increase for the Advanced Driver Assistance System (ADAS) or autonomous driving, etc., which leads to an explosion in the amount of data generated in the vehicle.

As a result, there is a growing demand for a mass storage device for storing and managing the explosion in data.

Meanwhile, the mass storage device is expensive, and thus cannot be mounted in all of a plurality of signal processing devices in the vehicle. Accordingly, an efficient structure of a mass storage device and a method of operating the same are required.

### SUMMARY

It is an objective of the present disclosure to provide a signal processing device capable of efficiently operating a mass storage device in a vehicle, and a vehicle control device including the signal processing device.

It is another objective of the present disclosure to configure an efficient and scalable data storage device between nodes based on high bandwidth data communication between computing nodes.

It is yet another objective of the present disclosure to provide a signal processing device in which by directly sharing a storage device, a separate protocol is not required during data transmission or reception, and a vehicle control device including the signal processing device.

It is yet another objective of the present disclosure to provide a signal processing device capable of reducing system complexity by separating storing of data in an in-vehicle mass storage device and processing of data from the storage device, and a vehicle control device including the signal processing device.

It is yet another objective of the present disclosure to provide a signal processing device capable of improving efficient management and scalability of a data storage device, and a vehicle control device including the signal processing device.

In accordance with an aspect of the present disclosure, the above and other objectives can be accomplished by providing a signal processing device and a vehicle control device including the same, the signal processing device including: a first processor configured to exchange data with an external zonal signal processing device; a second processor configured to control a display; and a storage device including a plurality of namespaces, wherein the first processor is configured to control the zonal signal processing device to access a shared area or a shared namespace using Non-Volatile Memory Express based on Transport Control Protocol (NVMe/TCP).

Meanwhile, the first processor can be configured to exchange data with the zonal signal processing device through an external network switch.

Meanwhile, the first processor can be configured to operate as a host for accessing the shared area or the shared namespace in the storage device of the zonal signal processing device.

Meanwhile, the first processor can be configured to operate as a host of the NVMe/TCP, and the second processor can be configured to operate as a client of the NVMe/TCP.

Meanwhile, the signal processing device can further include a Peripheral Component Interconnect (PCI) Express switch connected between the storage device and the first processor or the second processor.

Meanwhile, the storage device can be configured to allocate a portion of the plurality of namespaces as a namespace dedicated to the first processor or the second processor, and to share the shared namespace, which corresponds to another portion of the plurality of namespaces, with the first processor or the second processor or the zonal signal processing device.

Meanwhile, the storage device can be configured to exchange data with the first processor or the second processor through Remote direct memory access (RMDA).

Meanwhile, the storage device can be configured to operate using Non-Volatile Memory express over Fabrics (NVMeoF) based on RDMA over PCI Express.

Meanwhile, the first processor or the second processor can be configured to execute NTB Transport on the PCI Express Bus and to execute Remote direct memory access (RMDA) on the NTB Transport.

Meanwhile, the first processor or the second processor can be configured to execute NTB Transport on the PCI Express Bus and to execute NTB_NETDEV, operating as a synchronization channel for sharing a file object, on the NTB Transport.

Meanwhile, the first processor or the second processor can be configured to execute NTB Transport on the PCI Express Bus and to execute NTB_NETDEV, operating as a synchronization channel for sharing a file object, on the NTB Transport.

Meanwhile, the first processor or the second processor can be configured to: execute NTB Transport on the PCI Express Bus and respectively execute Remote direct memory access (RMDA) and NTB_NETDEV on the NTB Transport; transmit camera data, image data, or sensor data through the RMDA; and transmit control data through the NTB_NETDEV.

Meanwhile, the storage device can include: a plurality of ports for connection to the first processor and the second processor; and a controller configured to process instructions through each of the plurality of ports.

Meanwhile, one of the plurality of namespaces in the storage device can be configured to store a lock table including a path, name, and lock status of a file object.

Meanwhile, in response to the lock status being a released status, the storage device can be configured to allow access of the first processor or the second processor or the zonal signal processing device.

Meanwhile, in response to abnormality in operation of an indicator of the storage device or in an active signal of the storage device, the first processor or the second processor can be configured to determine whether the operation of the storage device fails, and upon determining that the operation of the storage device fails, can be configured to reset the storage device.

Meanwhile, the first processor or the second processor can be configured to operate in one of the following: a first booting mode in which booting is performed when the first processor or the second processor and the storage device are turned off; a second booting mode in which booting is performed when the first processor and the storage device are in a standby mode and when the second processor is turned off; and a third booting mode in which booting is performed when the first processor, the second processor, and the storage device are in a standby mode.

Meanwhile, the first processor or the second processor can each exchange data through InfiniBand card.

Meanwhile, the first processor can be configured to receive camera data or sensor data from the zonal signal processing device, and to store the camera data or the sensor data in the storage device or to perform data processing based on the camera data or the sensor data.

Meanwhile, the second processor can be configured to control an image based on the camera data from the zonal signal processing device to be displayed on the display.

In accordance with another aspect of the present disclosure, the above and other objectives can be accomplished by providing a signal processing device and a vehicle control device including the same, the signal processing device including: a first processor configured to exchange data with an external zonal signal processing device; a second processor configured to control a display; and a storage device including a plurality of namespaces, wherein the first processor is configured to operate using Non-Volatile Memory Express based on Transport Control Protocol (NVMe/TCP), and one of the plurality of namespaces in the storage device is configured to store a lock table including a path, name, and lock status of a file object.

In accordance with yet another aspect of the present disclosure, the above and other objectives can be accomplished by providing a signal processing device and a vehicle control device including the same, the signal processing device including: a first processor configured to exchange data with an external zonal signal processing device; a second processor configured to control a display; and a storage device including a plurality of namespaces, wherein the storage device is configured to exchange data with the first processor or the second processor through Remote direct memory access (RMDA), and the first processor is configured to exchange data with the zonal signal processing device using Non-Volatile Memory Express based on Transport Control Protocol (NVMe/TCP).

### EFFECTS OF THE DISCLOSURE

A signal processing device and a vehicle control device including the same according to an embodiment of the present disclosure include: a first processor configured to exchange data with an external zonal signal processing device; a second processor configured to control a display; and a storage device including a plurality of namespaces, wherein the first processor is configured to control the zonal signal processing device to access a shared area or a shared namespace using Non-Volatile Memory Express based on Transport Control Protocol (NVMe/TCP). Accordingly, it is possible to efficiently operate a mass storage device in a vehicle.

Meanwhile, the first processor can be configured to exchange data with the zonal signal processing device through an external network switch. Accordingly, it is possible to efficiently operate a mass storage device in a vehicle.

Meanwhile, the first processor can be configured to operate as a host for accessing the shared area or the shared namespace in the storage device of the zonal signal processing device. Accordingly, it is possible to efficiently operate a mass storage device in a vehicle. Further, system complexity can be reduced by separating storing of data in the storage device and processing of data from the storage device.

Meanwhile, the first processor can be configured to operate as a host of the NVMe/TCP, and the second processor can be configured to operate as a client of the NVMe/TCP. Accordingly, it is possible to efficiently operate a mass storage device in a vehicle.

Meanwhile, the signal processing device can further include a Peripheral Component Interconnect (PCI) Express switch connected between the storage device and the first processor or the second processor. Accordingly, it is possible to efficiently operate a mass storage device in a vehicle.

Meanwhile, the storage device can be configured to allocate a portion of the plurality of namespaces as a namespace dedicated to the first processor or the second processor, and to share the shared namespace, which corresponds to another portion of the plurality of namespaces, with the first processor or the second processor or the zonal signal processing device. Accordingly, it is possible to efficiently operate a mass storage device in a vehicle.

Meanwhile, the storage device can be configured to exchange data with the first processor or the second processor through Remote direct memory access (RMDA). Accordingly, it is possible to efficiently operate a mass storage device in a vehicle. Further, it is possible to configure an efficient and scalable data storage device between nodes based on high bandwidth data communication between computing nodes.

Meanwhile, the storage device can be configured to operate using Non-Volatile Memory express over Fabrics (NVMeoF) based on RDMA over PCI Express. Accordingly, it is possible to efficiently operate a mass storage device in a vehicle. In addition, by directly sharing a storage device, a separate protocol is not required during data transmission or reception.

Meanwhile, the first processor or the second processor can be configured to execute NTB Transport on the PCI Express Bus and to execute Remote direct memory access (RMDA) on the NTB Transport. Accordingly, it is possible to efficiently operate a mass storage device in a vehicle. Further, it is possible to improve efficient management and scalability of a data storage device.

Meanwhile, the first processor or the second processor can be configured to execute NTB Transport on the PCI Express Bus and to execute NTB_NETDEV, operating as a synchronization channel for sharing a file object, on the NTB Transport. Accordingly, it is possible to efficiently operate a mass storage device in a vehicle.

Meanwhile, the first processor or the second processor can be configured to execute NTB Transport on the PCI Express Bus and to execute NTB_NETDEV, operating as a synchronization channel for sharing a file object, on the NTB Transport. Accordingly, it is possible to efficiently operate a mass storage device in a vehicle.

Meanwhile, the first processor or the second processor can be configured to: execute NTB Transport on the PCI Express Bus and respectively execute Remote direct memory access (RMDA) and NTB_NETDEV on the NTB Transport; transmit camera data, image data, or sensor data through the RMDA; and transmit control data through the NTB_NETDEV. Accordingly, it is possible to efficiently operate a mass storage device in a vehicle.

Meanwhile, the storage device can include: a plurality of ports for connection to the first processor and the second processor; and a controller configured to process instructions through each of the plurality of ports. Accordingly, it is possible to efficiently operate a mass storage device in a vehicle.

Meanwhile, one of the plurality of namespaces in the storage device can be configured to store a lock table including a path, name, and lock status of a file object. Accordingly, it is possible to efficiently operate a mass storage device in a vehicle.

Meanwhile, in response to the lock status being a released status, the storage device can be configured to allow access of the first processor or the second processor or the zonal signal processing device. Accordingly, it is possible to efficiently operate a mass storage device in a vehicle.

Meanwhile, in response to abnormality in operation of an indicator of the storage device or in an active signal of the storage device, the first processor or the second processor can be configured to determine whether the operation of the storage device fails, and upon determining that the operation of the storage device fails, can be configured to reset the storage device. Accordingly, it is possible to efficiently operate a mass storage device in a vehicle. Further, it is possible to provide functions as required according to safety requirements for an in-vehicle device.

Meanwhile, the first processor or the second processor can be configured to operate in one of the following: a first booting mode in which booting is performed when the first processor or the second processor and the storage device are turned off; a second booting mode in which booting is performed when the first processor and the storage device are in a standby mode and when the second processor is turned off; and a third booting mode in which booting is performed when the first processor, the second processor, and the storage device are in a standby mode. Accordingly, it is possible to efficiently operate a mass storage device in a vehicle. Further, it is possible to provide functions as required according to safety requirements for an in-vehicle device.

Meanwhile, the first processor or the second processor can each exchange data through InfiniBand card. Accordingly, it is possible to efficiently operate a mass storage device in a vehicle.

Meanwhile, the first processor can be configured to receive camera data or sensor data from the zonal signal processing device, and to store the camera data or the sensor data in the storage device or to perform data processing based on the camera data or the sensor data. Accordingly, it is possible to efficiently operate a mass storage device in a vehicle.

Meanwhile, the second processor can be configured to control an image based on the camera data from the zonal signal processing device to be displayed on the display. Accordingly, it is possible to efficiently operate a mass storage device in a vehicle.

In accordance with another aspect of the present disclosure, the above and other objectives can be accomplished by providing a signal processing device and a vehicle control device including the same, the signal processing device including: a first processor configured to exchange data with an external zonal signal processing device; a second processor configured to control a display; and a storage device including a plurality of namespaces, wherein the first processor is configured to operate using Non-Volatile Memory Express based on Transport Control Protocol (NVMe/TCP), and one of the plurality of namespaces in the storage device is configured to store a lock table including a path, name, and lock status of a file object. Accordingly, it is possible to efficiently operate a mass storage device in a vehicle.

In accordance with yet another aspect of the present disclosure, the above and other objectives can be accomplished by providing a signal processing device and a vehicle control device including the same, the signal processing device including: a first processor configured to exchange data with an external zonal signal processing device; a second processor configured to control a display; and a storage device including a plurality of namespaces, wherein the storage device is configured to exchange data with the first processor or the second processor through Remote direct memory access (RMDA), and the first processor is configured to exchange data with the zonal signal processing device using Non-Volatile Memory Express based on Transport Control Protocol (NVMe/TCP). Accordingly, it is possible to efficiently operate a mass storage device in a vehicle.

### BRIEF DESCRIPTION OF THE DRAWINGS

FIG. 1 is a diagram illustrating an example of the exterior and interior of a vehicle;
FIGS. 2A to 2C are diagrams illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an exemplary internal block diagram of the vehicle of FIG. 1;
FIGS. 5A to 5D are diagrams illustrating various examples of a vehicle control device;
FIG. 6 is a diagram illustrating an example of a vehicle control device according to an embodiment of the present disclosure;
FIG. 7A is an exemplary internal block diagram of a signal processing device associated with the present disclosure;
FIG. 7B is a diagram illustrating a vehicle control device associated with the present disclosure;
FIG. 8A is an exemplary block diagram of a vehicle control device according to an embodiment of the present disclosure;
FIG. 8B is an exemplary block diagram of a vehicle control device according to another embodiment of the present disclosure;
FIG. 8C is an exemplary block diagram of a vehicle control device according to yet another embodiment of the present disclosure;
FIGS. 9A to 10D are diagrams referred to in the description of FIGS. 8A to 8C; and
FIG. 11 is a flowchart illustrating a method of operating a signal processing device according to an embodiment of the present disclosure.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

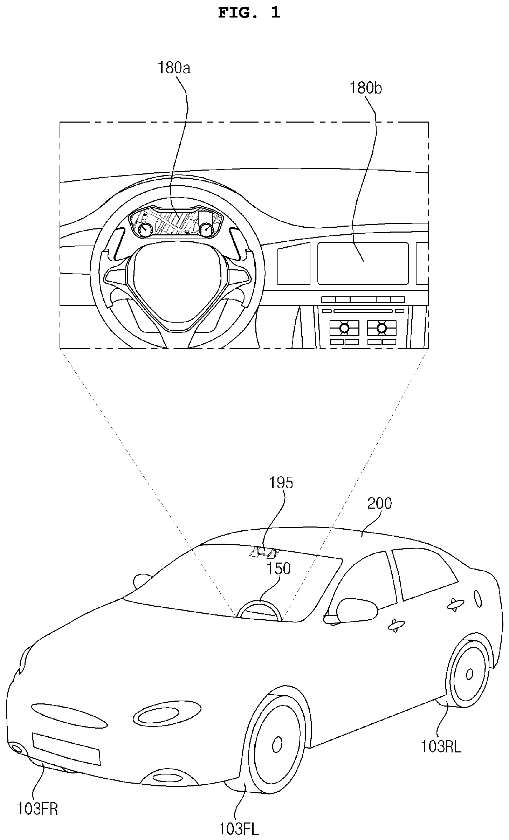

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

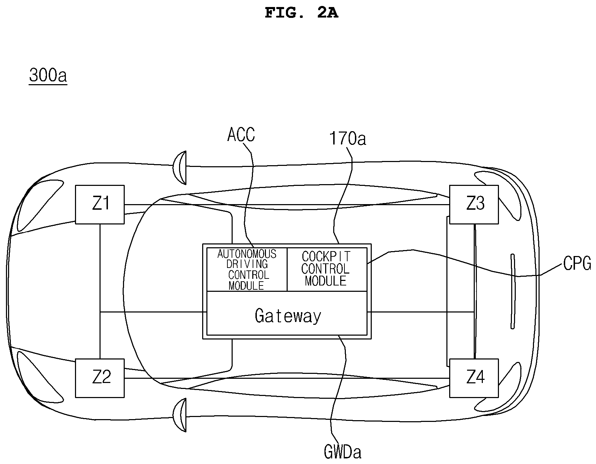

FIGS. 2A to 2C are diagrams illustrating various architectures of a vehicle communication gateway.

First, FIG. 2A is a diagram illustrating a first architecture of a vehicle communication gateway according to an embodiment of the present disclosure.

Referring to the drawing, the first architecture 300a can correspond to a zone-based architecture.

Accordingly, in-vehicle sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further comprise an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2A can exchange data with an external communication module (not shown) or processors (not shown) in the plurality of zones Z1 to Z4.

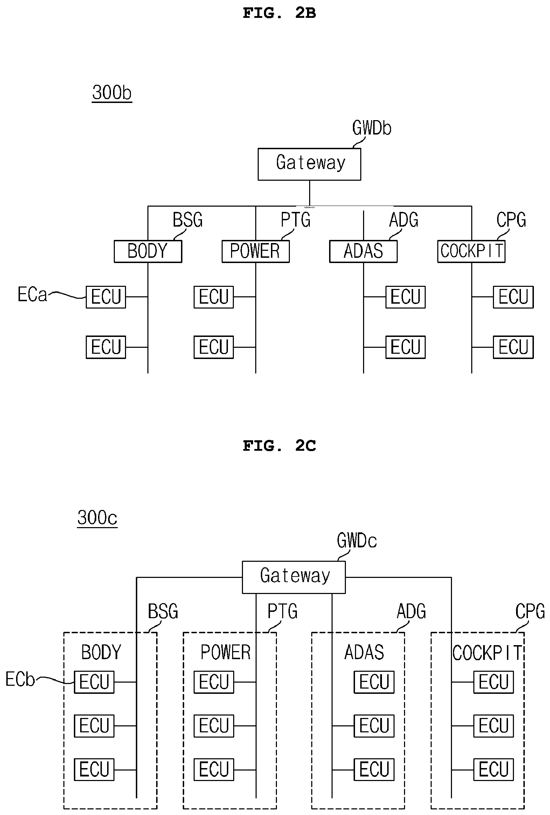

FIG. 2B is a diagram illustrating a second architecture of a vehicle communication gateway according to an embodiment of the present disclosure.

Referring to the drawing, a second architecture 300b can correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU can be electrically connected to the respective modules BSG, PTG, ADG, and CPG.

Meanwhile, the respective processors ECU can be connected to the gateway GWDb while being integrated therein.

Meanwhile, the signal processing device 170 including the gateway GWDb of FIG. 2B can function as a domain integrated signal processing device.

FIG. 2C is a diagram illustrating a third architecture of a vehicle communication gateway according to an embodiment of the present disclosure.

Referring to the drawing, a third architecture 300c can correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules can be electrically connected in parallel to the gateway GWDc.

In comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

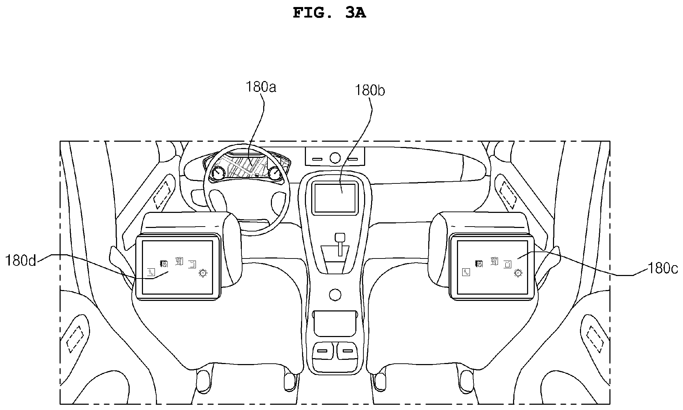

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

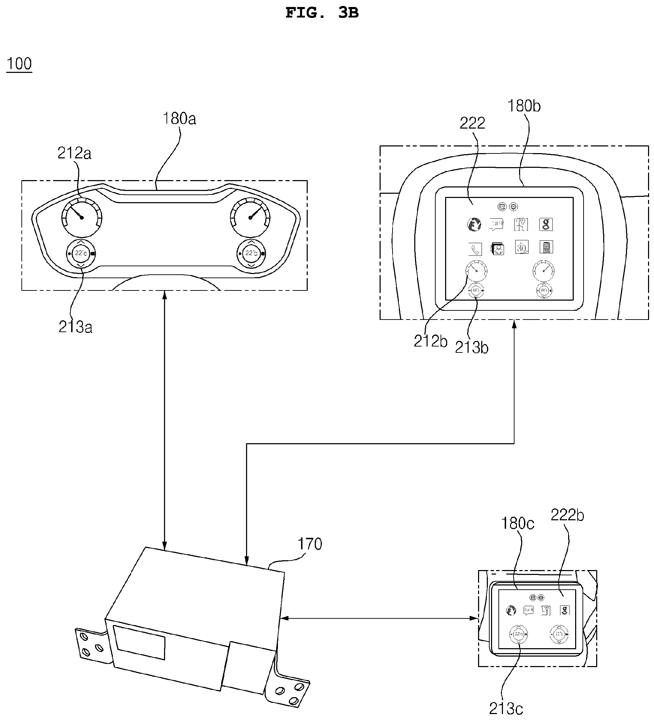

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b.

A first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

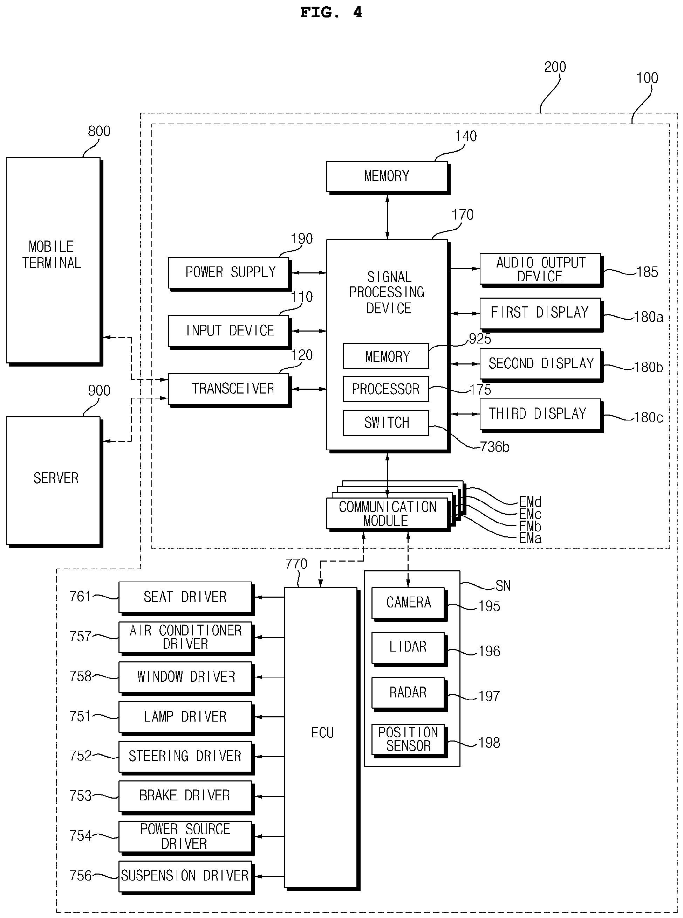

FIG. 4 is an exemplary internal block diagram of the vehicle of FIG. 1.

Referring to the figure, the vehicle 200 according to an embodiment of the present disclosure can include a lamp driver 751, a steering driver 752, a brake driver 753, a power source driver 754, a suspension driver 756, an air conditioner driver 755, a window driver 758, a seat driver 761, and the signal processing device 170.

Meanwhile, the vehicle 200 can further include an ECU 770, a plurality of sensor devices SN, and a plurality of communication modules EMa to EMd.

Meanwhile, the vehicle 200 according to an embodiment of the present disclosure can further include the vehicle display apparatus 100.

Referring to the figure, the vehicle display apparatus 100 according to the embodiment of the present disclosure can include an input device 110, a transceiver 120 for communication with an external device, the plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, each of the plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175..

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100 or the vehicle 200.

For example, the signal processing device 170 can include a processor 175 configured to perform signal processing for the vehicle displays 180a and 180b.

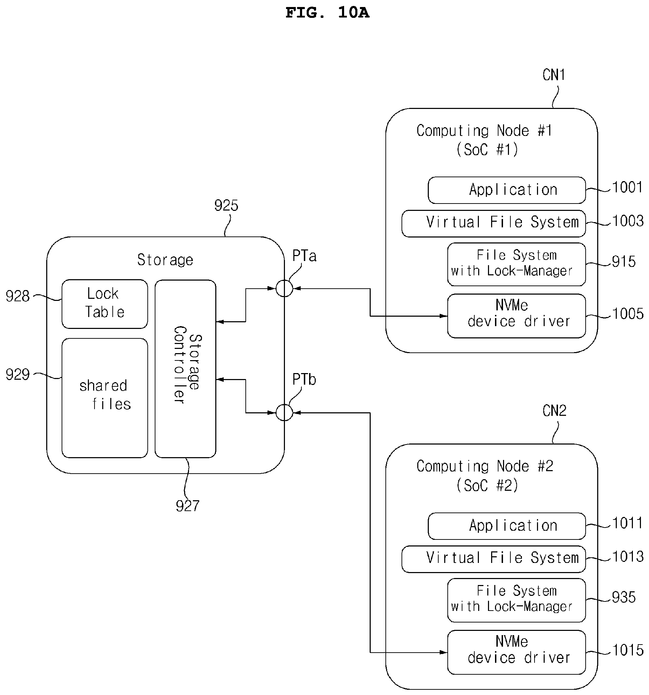

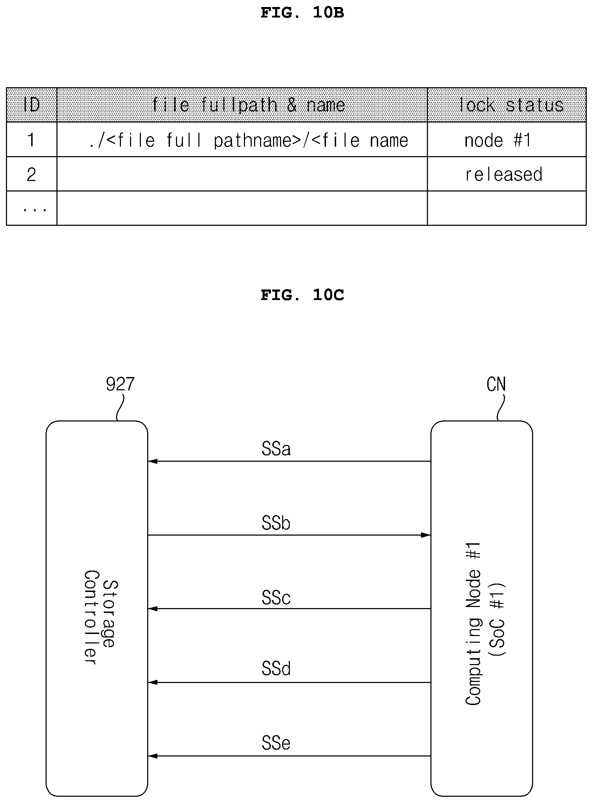

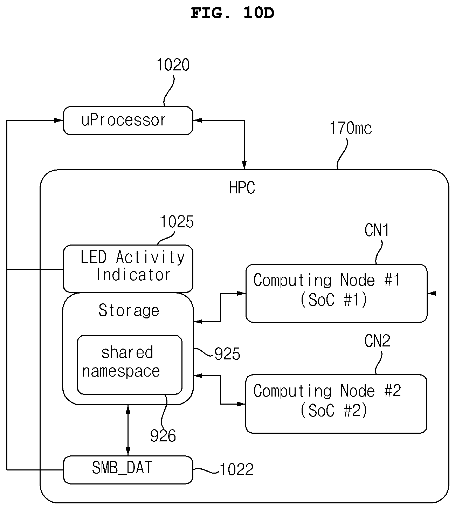

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

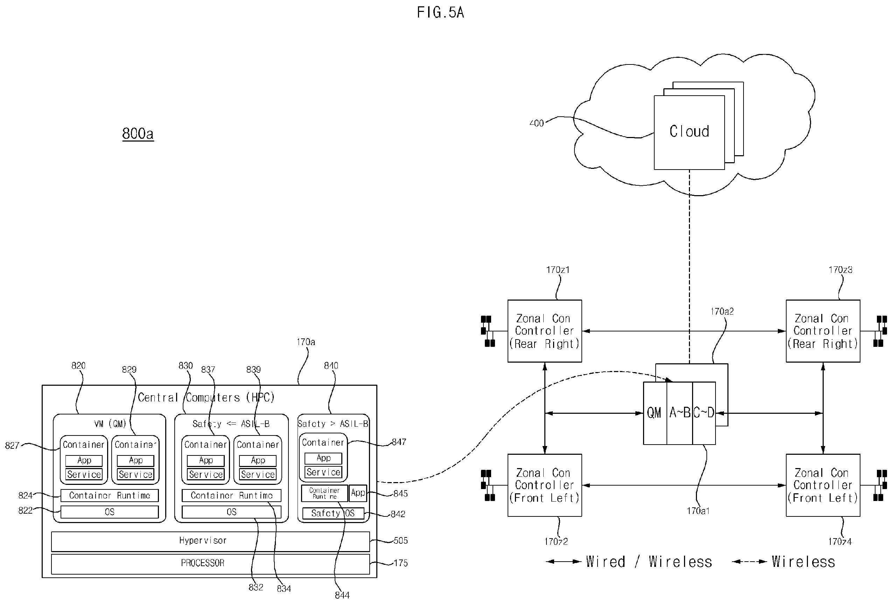

Meanwhile, the signal processing device 170 of FIG. 4 can be the same as signal processing devices 170, 170a1, and 170a2 of a vehicle control device of FIG. 5A and subsequent figures.

FIGS. 5A to 5D are diagrams illustrating various examples of a vehicle control device.

FIG. 5A is a diagram illustrating an example of a vehicle control device according to an embodiment of the present disclosure.

Referring to the figure, a vehicle control device 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data, and external vehicle lidar data.

Meanwhile, the camera data can include external vehicle camera data and vehicle internal camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can execute an operating system 822, a container runtime 824 on the operating system 822, and containers 827 and 829 on the container runtime 824.

The second virtual machine 830 can be a virtual machine corresponding to ASIL A or ASIL B with the combination of severity, exposure, and controllability values being 7 or 8.

The second virtual machine 830 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

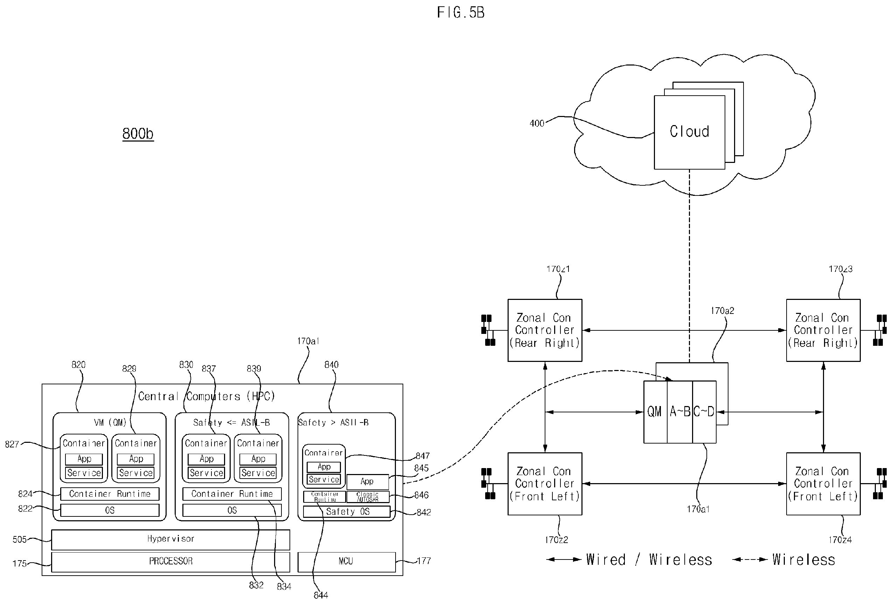

Meanwhile, unlike the drawing, the third virtual machine 840 can also be executed by a separate core, rather than by the processor 175, which will be described below with reference to FIG. 5B.

FIG. 5B is a diagram illustrating another example of a vehicle control device according to an embodiment of the present disclosure.

Referring to the figure, a vehicle control device 800b according to an embodiment of the present disclosure includes signal processing devices 170a1 and 170a2 and a plurality of zonal signal processing devices 170Z1 to 170Z4.

The vehicle control device 800b of FIG. 5B is similar to the vehicle control device 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 830 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

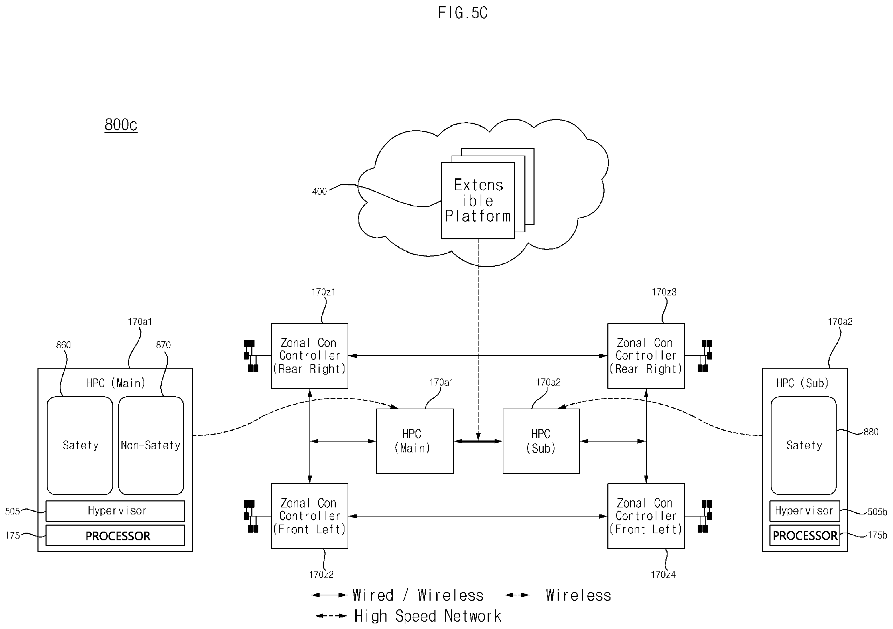

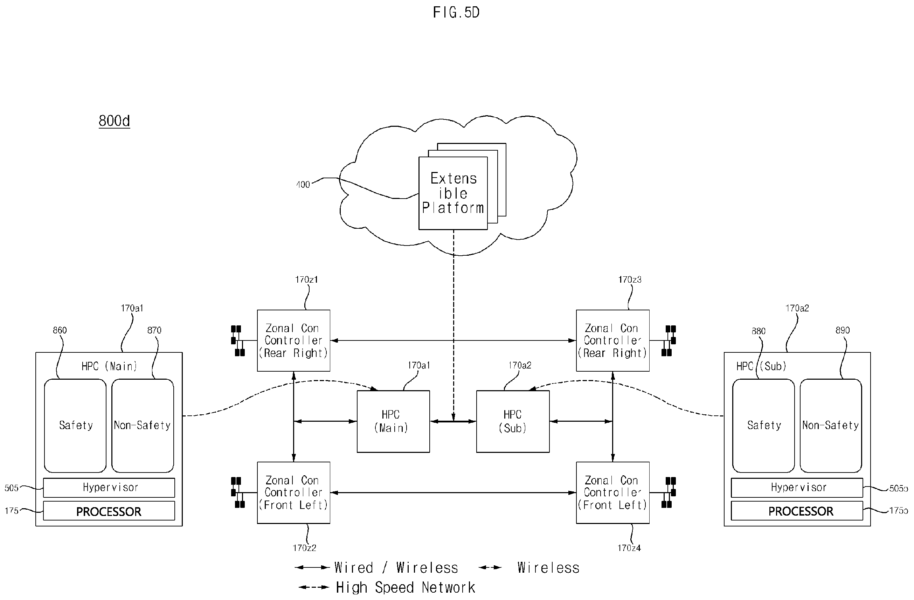

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle control device according to an embodiment of the present disclosure.

Referring to the figure, a vehicle control device 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle control device according to an embodiment of the present disclosure.

Referring to the figure, a vehicle control device 800d according to an embodiment of the present disclosure includes signal processing devices 170a1 and 170a2 and a plurality of zonal signal processing devices 170Z1 to 170Z4.

The vehicle control device 800d of FIG. 5D is similar to the vehicle control device 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can execute the hypervisor 505b, and can execute each of a safety virtual machine 880 and a non safety virtual machine 890 on the hypervisor 505.

That is, unlike FIG. 5C, there is a difference in that the processor 175b in the second signal processing device 170a2 further executes the non safety virtual machine 890.

In the method, safety and non safety virtual machines can be processed separately by the first signal processing device 170a1 and the second signal processing device 170a2, thereby improving stability and processing speed.

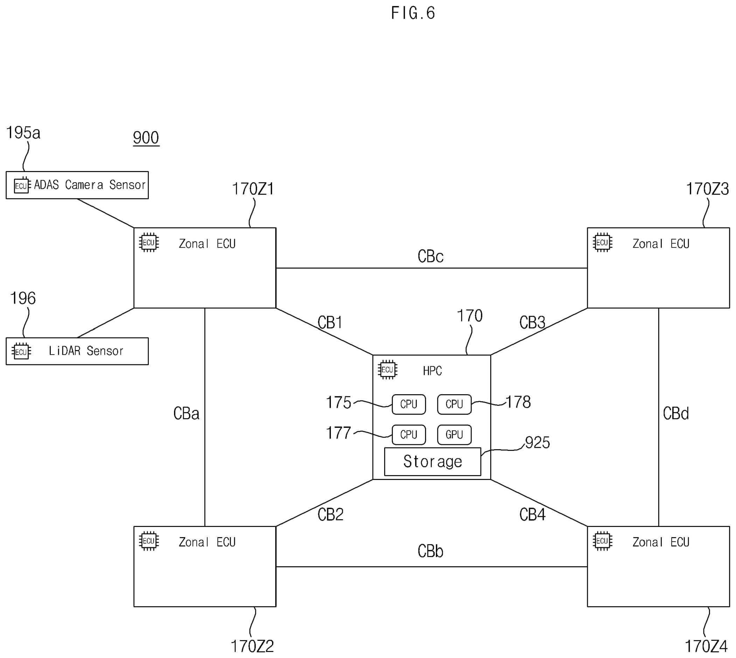

FIG. 6 is an exemplary block diagram of a vehicle control device according to an embodiment of the present disclosure.

Referring to the figure, a vehicle control device 900 according to an embodiment of the present disclosure includes a plurality of zonal signal processing devices 170Z1 to 170Z4 and a signal processing device 170.

In this case, the signal processing device 170 is a high-performance centralized signal processing and control device including a plurality of CPUs, GPUs, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a mass storage device 925.

For example, the at least one processor can be a central processor.

Meanwhile, the signal processing device 170 according to an embodiment of the present disclosure can further include a graphic processor or a neural processor.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network

To this end, the signal processing device 170 according to an embodiment of the present disclosure can perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle control device 900 according to an embodiment of the present disclosure is peripheral component interconnect express communication in order to provide high band and low delay communication.

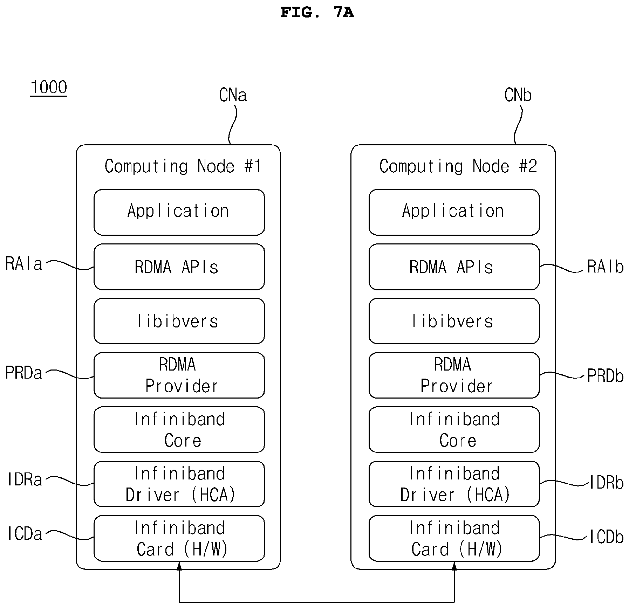

FIG. 7A is an exemplary internal block diagram of a signal processing device associated with the present disclosure.

Referring to FIG. 7A, a signal processing device 1000 associated with the present disclosure can perform fiber-optic cable-based data communication between two computing nodes CNa and CNb.

A first computing node CNa includes InfiniBand card ICDa which is hardware, and is configured to execute InfiniBand driver IDRa for operating the InfiniBand card ICDa which is hardware and to execute InfiniBand core on the InfiniBand driver IDRa.

Meanwhile, the first computing node CNa is configured to execute Remote direct memory access (RMDA) provider PRDa on the InfiniBand core, to execute Application Programming Interface (API) RAIa on the RMDA provider PRDa, and to execute an application on the RMDA API RAIa.

Meanwhile, the application in the first computing node CNa is configured to transmit a large amount of data to a second computing node CNb, which is a correspondent node, by using user level RMDA API(RAIa) such as rcopy.

The second computing node CNb includes InfiniBand card ICDb which is hardware, and is configured to execute InfiniBand driver IDRb for operating the InfiniBand card ICDb which is hardware and to execute InfiniBand core on the InfiniBand driver IDRb.

Meanwhile, the second computing node CNb is configured to execute Remote direct memory access (RMDA) provider PRDb on the InfiniBand core, to execute Application Programming Interface RAIb on the RMDA provider PRDb, and to execute an application on the RMDA API RAIb.

Meanwhile, the application in the second computing node CNb is configured to transmit a large amount of data to the first computing node CNa, which is a correspondent node, by using user level RMDA API(RAIb) such as rcopy.

As described above, the signal processing device 1000 associated with the present disclosure can transmit or receive a large amount of data by combining the InfiniBand and the RMDA.

However, the signal processing device 1000 associated with the present disclosure is required to use an inflexible fiber optic cable, thereby causing space or design constraints.

Accordingly, in the present disclosure, Peripheral Component Interconnect Express can be applied, instead of the InfiniBand, between the computing nodes or the processors.

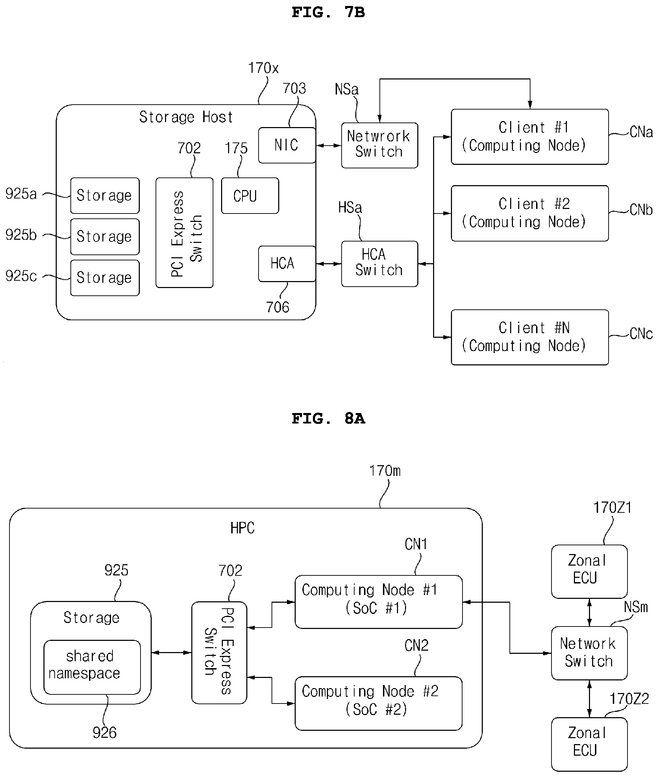

FIG. 7B is a diagram illustrating a vehicle control device associated with the present disclosure.

Referring to FIG. 7B, the vehicle control device associated with the present disclosure includes a storage device 170x, a plurality of computing nodes CNa, CNb, and CNc, and a Host Channel Adapter (HCA) switch HSa, which is a dedicated network adapter, for communication between the storage device 170x and the plurality of computing nodes CNa, CNb, and CNc.

Meanwhile, the vehicle control device associated with the present disclosure can further include a network switch NSa for communication between a portion CNa of the plurality of computing nodes CNa, CNb, and CNc and the storage device 170x.

In this case, the plurality of computing nodes CNa, CNb, and CNc can be a plurality of processors or a plurality of signal processing devices.

Meanwhile, the storage device 170x can include a host channel adapter 706 and a network interface card 703 which correspond to the Host Channel Adapter (HCA) switch HSa and the network switch NSa, respectively.

Meanwhile, the storage device 170x can include an internal processor 175, a PCI Express switch 702, and a plurality of storage memories 925a to 925c.

In the configuration of FIG. 7B including the storage device 170x, the Host Channel Adapter (HCA) switch HSa, the network switch NSa, and the plurality of computing nodes CNa, CNb, and CNc, a separate TCP channel is required in order to share a file object present in a shared area of the storage device 170x.

Accordingly, the present disclosure proposes a method of efficiently operating a mass storage device without the need for a separate channel when sharing a file object present in a shared area or a shared namespace of a mass storage device, which will be described below with reference to FIG. 8A.

FIG. 8A is an exemplary block diagram of a vehicle control device according to an embodiment of the present disclosure.

Referring to FIG. 8A, the vehicle control device according to an embodiment of the present disclosure includes a central signal processing device 170m, a zonal signal processing device 170Z1, and a network switch NSm.

Meanwhile, the vehicle control device according to an embodiment of the present disclosure can include a plurality of zonal signal processing devices 170Z1 and 170Z2.

Meanwhile, each of the plurality of zonal signal processing devices 170Z1 and 170Z2 can exchange data with the signal processing device 170m through the network switch NSm.

For example, the plurality of zonal signal processing devices 170Z1 and 170Z2 can transmit camera data, image data, or sensor data to the signal processing device 170m through the network switch NSm.

Meanwhile, the plurality of zonal signal processing devices 170Z1 and 170Z2 can receive a control signal from the signal processing device 170m through the network switch NSm.

The signal processing device 170m according to an embodiment of the present disclosure includes a first processor CN1 configured to exchange data with an external zonal signal processing device 170Z1, and a second processor CN2 configured to control a display 180, and a storage device 925 including a plurality of namespaces.

Meanwhile, the first processor CN1 controls the zonal signal processing device 170Z1 to access a shared area or a shared namespace 926 in the storage device 925 using Non-Volatile Memory Express based on Transport Control Protocol (NVMe/TCP). Accordingly, it is possible to efficiently operate the mass storage device 925 in a vehicle (hereinafter referred to as an in-vehicle mass storage device).

Meanwhile, the first processor CN1 can exchange data with the zonal signal processing device 170Z1 through an external network switch NSm. Accordingly, it is possible to efficiently operate the in-vehicle mass storage device 925.

Meanwhile, the first processor CN1 can operate as a host for accessing the shared area or the shared namespace 926 in the storage device 925 of the zonal signal processing device 170Z1. Accordingly, it is possible to efficiently operate the in-vehicle mass storage device 925. Further, system complexity can be reduced by separating storing of data in the storage device 925 and processing of data from the storage device 925.

Meanwhile, the first processor CN1 acts as a host of the NVMe/TCP, and the second processor CN2 acts as a client of the NVMe/TCP. Accordingly, it is possible to efficiently operate the in-vehicle mass storage device 925.

Meanwhile, the signal processing device 170m according to an embodiment of the present disclosure can further include the PCI Express switch 702 connected between the storage device 925 and the first processor CN1 or the second processor CN2. Accordingly, it is possible to efficiently operate the in-vehicle mass storage device 925.

Meanwhile, the storage device 925 can allocate a portion of the plurality of namespaces as a namespace dedicated to the first processor CN1 or the second processor CN2, can share the shared namespace 926, which is another portion of the plurality of namespaces, with the first processor CN1 or the second processor CN2 or the zonal signal processing device 170Z1. Accordingly, it is possible to efficiently operate the in-vehicle mass storage device 925.

Meanwhile, the storage device 925 can exchange data with the first processor CN1 or the second processor CN2 through the RDMA. Accordingly, it is possible to efficiently operate the in-vehicle mass storage device 925. Further, it is possible to configure an efficient and scalable data storage device 925 between nodes based on high bandwidth data communication between computing nodes.

Meanwhile, the storage device 925 can operate using Non-Volatile Memory express over Fabrics (NVMeoF) based on RDMA over PCI Express. Accordingly, it is possible to efficiently operate the in-vehicle mass storage device 925. In addition, by directly sharing the storage device 925, a separate protocol is not required during data transmission or reception.

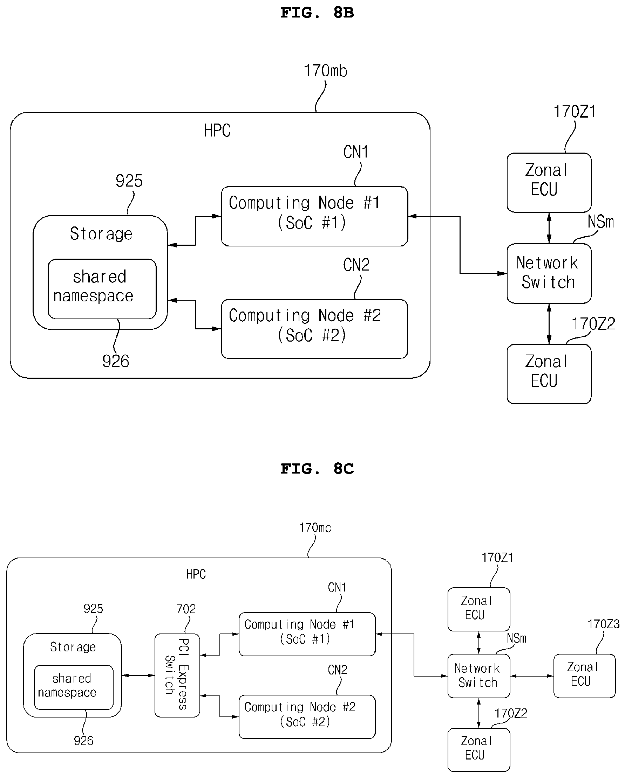

FIG. 8B is an exemplary block diagram of a vehicle control device according to another embodiment of the present disclosure.

Referring to FIG. 8B, similarly to FIG. 8A, the vehicle control device according to another embodiment of the present disclosure can include a central signal processing device 170mb, a plurality of zonal signal processing devices 170Z1 and 170Z2, and a network switch NSm.

The plurality of zonal signal processing devices 170Z1 and 170Z2 and the network switch NSm can operate as described above with reference to FIG. 8A.

Meanwhile, the central signal processing device 170mb is different in that the PCI Express switch 702 is not included therein, unlike FIG. 8A.

In response thereto, the storage device 925 can include a plurality of ports (not shown) for connection to the first processor CN1 and the second processor CN2, and a controller (not shown) that processes instructions through each of the plurality of ports. Accordingly, it is possible to efficiently operate the in-vehicle mass storage device 925.

The signal processing device 170mb according to another embodiment of the present disclosure includes a first processor CN1 configured to exchange data with an external zonal signal processing device 170Z1, a second processor CN2 configured to control a display 180, and a storage device 925 including a plurality of namespaces.

Meanwhile, the first processor CN1 controls the zonal signal processing device 170Z1 to access a shared area or a shared namespace 926 in the storage device 925 using Non-Volatile Memory Express based on Transport Control Protocol (NVMe/TCP). Accordingly, it is possible to efficiently operate the in-vehicle mass storage device 925.

Meanwhile, the first processor CN1 can exchange data with the zonal signal processing device 170Z1 through an external network switch NSm. Accordingly, it is possible to efficiently operate the in-vehicle mass storage device 925.

Meanwhile, the first processor CN1 can operate as a host for accessing the shared area or the shared namespace 926 in the storage device 925 of the zonal signal processing device 170Z1. Accordingly, it is possible to efficiently operate the in-vehicle mass storage device 925. Further, system complexity can be reduced by separating storing of data in the storage device 925 and processing of data from the storage device 925.

Meanwhile, the first processor CN1 acts as a host of the NVMe/TCP, and the second processor CN2 acts as a client of the NVMe/TCP. Accordingly, it is possible to efficiently operate the in-vehicle mass storage device 925.

Meanwhile, the storage device 925 can allocate a portion of the plurality of namespaces as a namespace dedicated to the first processor CN1 or the second processor CN2, can share the shared namespace 926, which is another portion of the plurality of namespaces, with the first processor CN1 or the second processor CN2 or the zonal signal processing device 170Z1. Accordingly, it is possible to efficiently operate the in-vehicle mass storage device 925.

Meanwhile, the storage device 925 can exchange data with the first processor CN1 or the second processor CN2 through the RDMA. Accordingly, it is possible to efficiently operate the in-vehicle mass storage device 925. Further, it is possible to configure an efficient and scalable data storage device 925 between nodes based on high bandwidth data communication between computing nodes.

Meanwhile, the storage device 925 can operate using Non-Volatile Memory express over Fabrics (NVMeoF) based on RDMA over PCI Express. Accordingly, it is possible to efficiently operate the in-vehicle mass storage device 925. In addition, by directly sharing the storage device 925, a separate protocol is not required during data transmission or reception.

FIG. 8C is an exemplary block diagram of a vehicle control device according to yet another embodiment of the present disclosure.

Referring to FIG. 8C, similarly to FIG. 8A, the vehicle control device according to yet another embodiment of the present disclosure can include a central signal processing device 170mc, a plurality of zonal signal processing devices 170Z1, 170Z2, and 170Z3, and a network switch NSm.

Meanwhile, there is a difference in that the first zonal signal processing device 170Z1 and the second zonal signal processing device 170Z2 are illustrated as a plurality of zonal signal processing devices in FIG. 8A, but a third zonal signal processing device 170Z3 is further included in FIG. 8C.

Meanwhile, the operation of the central signal processing device 170mc can correspond to the operation of the central signal processing device 170m of FIG. 8A.

Meanwhile, referring to FIGS. 8A to 8C, the plurality of zonal signal processing devices 170Z1 and 170Z2 can access a shared area or a shared namespace in the storage device using Non-Volatile Memory Express based on Transport Control Protocol (NVMe/TCP).

Meanwhile, the signal processing devices 170m, 170mb, and 170mc can include a plurality of computing nodes as in the plurality of processors CN1 and CN2, and the plurality of computing nodes can access the shared area or the shared namespace in the storage device 925 through the NVMeoF over PCI Express Bus. In this case, no separate channel is required for synchronizing a shared file object.

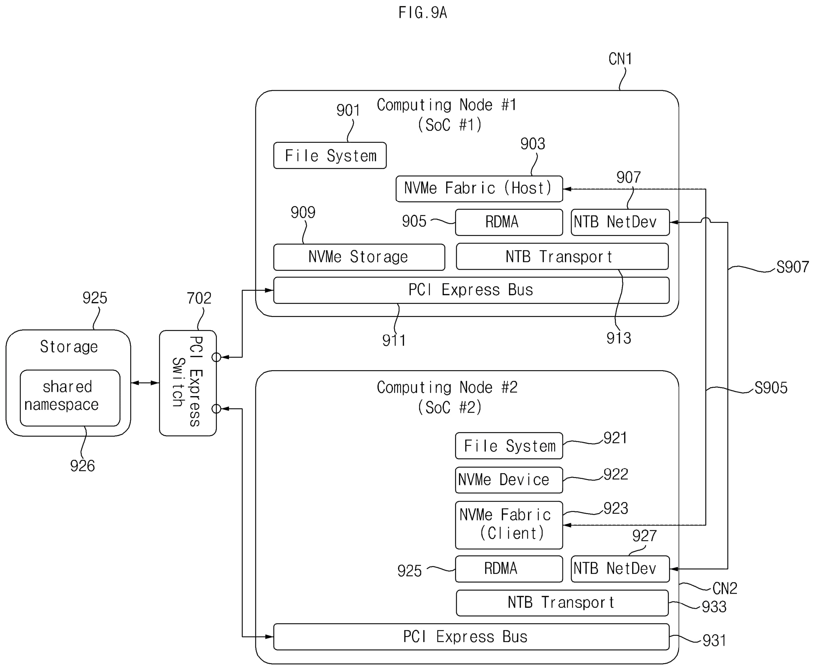

FIGS. 9A to 10D are diagrams referred to in the description of FIGS. 8A to 8C.

FIG. 9A is a diagram explaining the operation between a plurality of processors in a signal processing device.

Referring to FIG. 9A, the first processor CN1 or the second processor CN2 can execute NTB Transport on the PCI Express Bus and execute Remote direct memory access (RMDA) on the NTB Transport. Accordingly, it is possible to efficiently operate the in-vehicle mass storage device 925. Further, efficient management and scalability of the data storage device 925 can be improved.

Meanwhile, the first processor CN1 or the second processor CN2 can be configured to execute the NTB Transport on the PCI Express Bus and to execute NTB_NETDEV, operating as a synchronization channel for sharing a file object, on the NTB Transport. Accordingly, it is possible to efficiently operate the in-vehicle mass storage device 925.

Meanwhile, the first processor CN1 or the second processor CN2 can execute the NTB Transport on the PCI Express Bus and execute NTB_NETDEV, operating as a synchronization channel for sharing a file object, on the NTB Transport. Accordingly, it is possible to efficiently operate the in-vehicle mass storage device 925.

Meanwhile, the first processor CN1 or the second processor CN2 can execute the NTB Transport on the PCI Express Bus and respectively execute the RMDA and the NTB_NETDEV on the NTB Transport, and can transmit camera data, image data, or sensor data through the RDMA and transmit control data through the NTB_NETDEV. Accordingly, it is possible to efficiently operate the in-vehicle mass storage device 925.

Specifically, the first processor CN1 can execute NTB Transport 913 and NVMe storage 909 on PCI Express Bus 911, execute RMDA 905 and NTB NetDev 907 on the NTB Transport 913, and execute NVMe Fabric host 903 on the RMDA 905.

In addition, the second processor CN2 can execute a file system 901.

Meanwhile, the second processor CN2 can execute NTB Transport 933 on PCI Express Bus 931, execute RMDA 925 and NTB NetDev 927 on the NTB Transport 933, execute NVMe Fabric client 923 on the RMDA 925, and execute NVMe device 922 on the NVMe Fabric client 923.

In addition, the second processor CN2 can execute a file system 921.

Meanwhile, Queue Pair of the NTB transport 913 and 933 can be configured to separately execute a request from the RDMA 905 and 925 and a request from the NTB NetDev 907 and 927.

Meanwhile, the NVMe storage 909 can be enumerated to the first processor CN1 through the PCI Express switch 702, and the second processor CN2 can access the NVMe storage 909 through a Fabric configuration.

That is, as in S905, the second processor CN2 can access the NVMe storage 909 through the NVMe Fabric host 903 and the NVMe Fabric client 923.

Then, as in S907, a network interface configured by the NTB NetDev 907 and 927 can be used for a synchronization channel of a file object of the shared area or the shared namespace 926 in the storage device 925.

For example, it is desirable to use a synchronization file system, such as GFS2 or OCFS, for sharing the file object of the shared area or the shared namespace 926 in the storage device 925.

Meanwhile, the synchronization file system, such as GFS2 or OCFS, requires a separate synchronization channel, such that the first processor CN1 and the second processor CN2 can execute the NTB NetDev 907 and NTB NetDev 927, respectively. Accordingly, a separate Ethernet channel is not required.

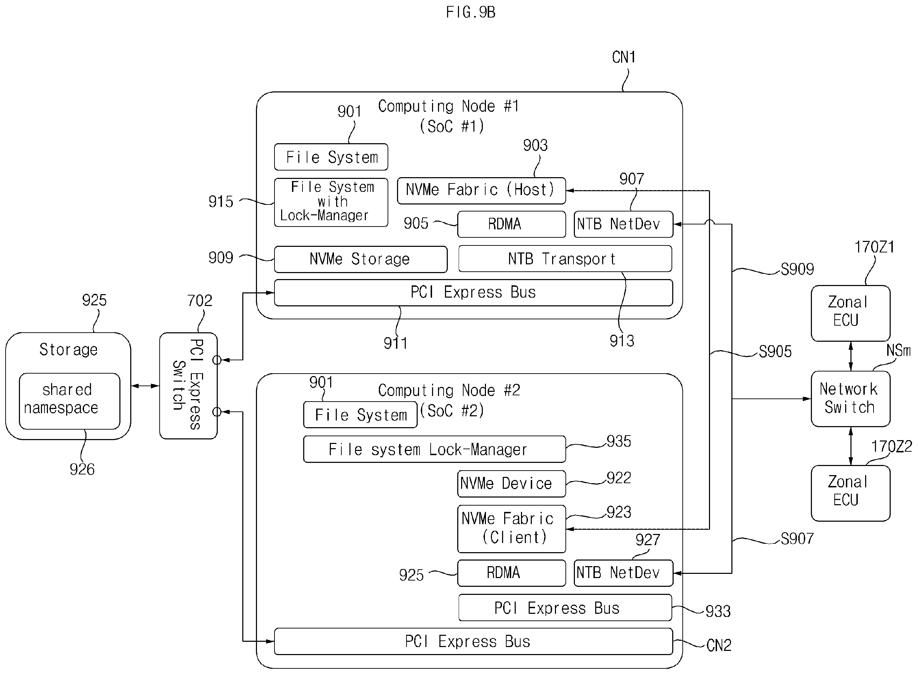

FIG. 9B is a diagram illustrating connection between the network switch NSm and the NTB NetDev 907 in the first processor CN1.

Referring to FIG. 9B, the plurality of zonal signal processing devices 170Z1 and 170Z2 can be connected to the NTB NetDev 907 in the first processor CN1 through the network switch NSm using NVMe/TCP (S909).

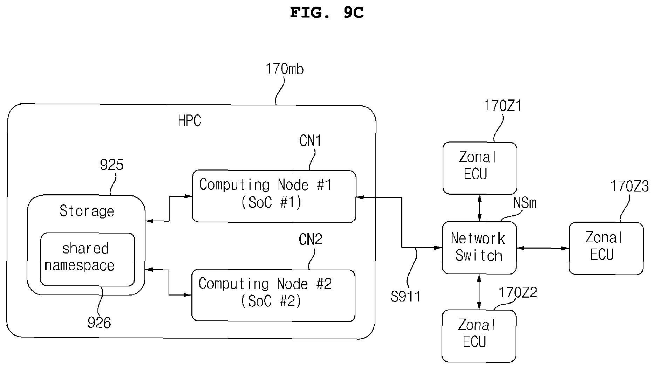

FIG. 9C is a diagram illustrating connection between the network switch NSm and the first processor CN1.

Referring to FIG. 9C, after operation S909 of FIG. 9B is performed, the plurality of zonal signal processing devices 170Z1 and 170Z2 can access the shared area or the shared namespace in the storage device 925 based on the NTB NetDev 907 in the first processor CN1 (S911).

That is, the first processor CN1 can be configured to operate as a host for accessing the shared area or the shared namespace 926 in the storage device 925 of the zonal signal processing device 170Z1. Accordingly, it is possible to efficiently operate the in-vehicle mass storage device 925. Further, system complexity can be reduced by separating storing of data in the storage device 925 and processing of data from the storage device 925.

Meanwhile, the mass storage device 925 can include a shared area or a shared namespace 926 that is simultaneously shared by the plurality of processors CN1 and CN2 or the plurality of zonal signal processing devices 170Z1 and 170Z2.

Meanwhile, it is desirable that the shared area or the shared namespace 926 is formatted by a shared file system such as GFS2. In addition, it is desirable to secure a separate synchronization channel for file object synchronization.

Meanwhile, in the storage device 925 according to an embodiment of the present disclosure, a file object can be synchronized by using only physical ports without configuring a separate synchronization channel such as Ethernet.

Meanwhile, the storage device 925 according to an embodiment of the present disclosure can be physically connected to the plurality of processors CN1 and CN2 therein through the PCI Express bus.

Meanwhile, the storage device 925 according to an embodiment of the present disclosure can generate and include a plurality of namespaces, some of which can be simultaneously shared by the plurality of processors CN1 and CN2 or the plurality of zonal signal processing devices 170Z1 and 170Z2.

Meanwhile, the plurality of zonal signal processing devices 170Z1 and 170Z2 can access the storage device 925 through NVMeoF/TCP.

FIG. 10A is a diagram illustrating connection between the storage device 925 and the plurality of processors CN1 and CN2 by using physical ports of the storage device 925.

Referring to FIG. 10A, the storage device 925 can include a plurality of ports PTa and PTb for connection to the first processor CN1 and the second processor CN2, and a controller 927 that processes instructions through each of the plurality of ports PTa and PTb.

Meanwhile, the storage device 925 can store a lock table 928 including a path, name, and lock status of the file object.

Particularly, one of the plurality of namespaces in the storage device 925 can store the lock table 928 including a path, name, and lock status of the file object.

Meanwhile, the storage device 925 can store a shared file 929.

Meanwhile, the first processor CN1 can execute NVMe device driver 1005, execute a file system 915 with Lock-Manager on the NVMe device driver 1005, execute a virtual file system 1003 on the file system 915, and execute an application 1001 on the virtual file system 1003.

Meanwhile, the second processor CN2 can execute NVMe device driver 1015, execute a file system with Lock-Manager 935 on the NVMe device driver 1015, execute a virtual file system 1013 on the file system 935, and execute an application 1011 on the virtual file system 1013.

FIG. 10B is a diagram illustrating an example of the lock table 928 of FIG. 10A.

Referring to FIG. 10B, the lock table 928 can include a path, name, and lock status of the file object. In this case, the path of the file object can be a full path.

Meanwhile, the lock status can include node information or released status information.

In this case, the node information can be information about the plurality of processors CN1 and CN2 or the plurality of zonal signal processing devices 170Z1 and 170Z2.

FIG. 10C is a diagram illustrating an example of signal exchange between the controller 927 in the storage device 925 and the first processor CN1.

Referring to FIG. 10C, the controller 927 in the storage device 925 can receive an access request message SSa from the first processor CN1 or the second processor CN2 or the first processor CN1 of the zonal signal processing device 170Z1.

In response thereto, the controller 927 in the storage device 925 can check whether a lock status value in the lock table 928 is a released status.

Meanwhile, in response to the lock status being the released status, the controller 927 in the storage device 925 can allow access of the first processor CN1.

Then, the controller 927 in the storage device 925 can transmit an access allow message SSb to the first processor CN1 to allow access of the first processor CN1.

Meanwhile, the first processor CN1 can perform a read or write operation for a file object in the shared area or the shared namespace 926 of the storage device 925 based on the received access allow message SSb.

In this case, the lock status value in the lock table 928 can be changed to an identifier, such as "node #1," which indicates the first processor CN1.

That is, upon obtaining an access right, the first processor CN1 updates the lock status in the lock table 928 to restrict access of another device to the file object.

For example, upon obtaining the access right, the first processor CN1 updates the lock status in the lock table 928 and transmits an access restriction message SSc to restrict access of another device to the file object.

Then, upon completing processing of the file object, the first processor CN1 can update (SSd) the lock status value.

For example, upon completing processing of the file object, the first processor CN1 can change the lock status value to a released status.

Accordingly, the first processor CN1 or the second processor CN2 or the zonal signal processing device 170Z1 can access the file object in the shared area or the shared namespace 926.

Meanwhile, the controller 927 in the storage device 925 can sequentially assign the access right to the file object in the shared area or the shared namespace 926.

For example, the controller 927 in the storage device 925 can sequentially assign the access right to the first processor CN1 or the second processor CN2 or the zonal signal processing device 170Z1.

Meanwhile, the first processor CN1 is not required to process the file object in the shared area or the shared namespace 926, such that it is desirable to immediately return the release access.

That is, the first processor CN1 is not required to process the file object in the shared area or the shared namespace 926, and thus can transmit an access return message SSe to the controller 927 in the storage device 925.

Accordingly, it is possible to efficiently share the file object in the shared area or the shared namespace 926.

FIG. 10D is a diagram referred to in the description of identifying an abnormal operation of the storage device 925.

Referring to FIG. 10D, a signal processing device 170mc can further include an indicator 1025 for identifying an abnormal operation of the storage device 925, in addition to the first processor CN1, the second processor CN2, and the storage device 925.

In addition, the signal processing device 170mc can further include system management bus 1022.

Meanwhile, a microcomputer 1020 can control the signal processing device 170mc based on a signal from the indicator 1025 and the system management bus 1022.

In the drawing, an example is illustrated in which the microcomputer 1020 is provided separately on the outside of the signal processing device 170mc, but the microcomputer 1020 can also be provided inside the signal processing device 170mc.

For example, in response to abnormality in operation of the indicator of the storage device 925 or in an active signal of the storage device, the microcomputer 1020 can determine whether the operation of the storage device 925 fails based on transmitting of check data and receiving of response data for the check data, and upon determining that the operation of the storage device 925 fails, the microcomputer 1020 can reset the storage device 925.

Accordingly, it is possible to efficiently operate the in-vehicle mass storage device 925. Further, it is possible to provide functions as required according to safety requirements for an in-vehicle device.

Meanwhile, unlike the drawing, the first processor CN1 or the second processor CN2, instead of the microcomputer 1020, can control the signal processing device 170mc based on the signal from the indicator 1025.

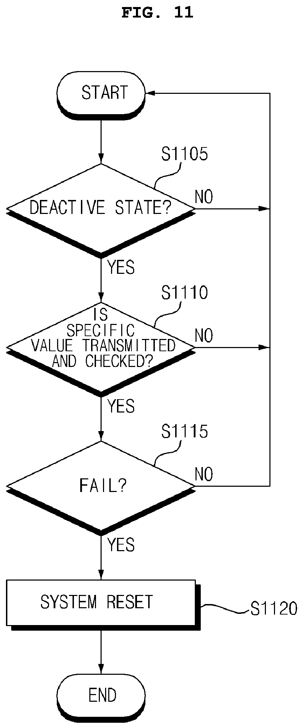

FIG. 11 is a flowchart illustrating a method of operating a signal processing device according to an embodiment of the present disclosure.

Referring to FIG. 11, the indicator 1025 in the signal processing device 170mc according to an embodiment of the present disclosure can output an active signal or a deactive signal in response to operation of the storage device 925.

Meanwhile, the microcomputer 1020 can determine whether the storage device 925 is in a deactive state based on the signal from the indicator 1025 (S1105), and if so, the microcomputer 1020 can transmit check data to the system management bus 1022.

Then, the microcomputer 1020 determines whether a response signal corresponding to the check data is received from the system management bus 1022 (S1110), and upon receiving the response signal and determining an abnormal operation, the microcomputer 1020 can determine whether the operation of the storage device 925 fails (S1115).

Upon determining in operation 1115 (S1115) that the operation of the storage device 925 fails, the microcomputer 1020 can reset the storage device 925 (S1120).

Further, the microcomputer 1020 can reset the signal processing device 170mc including the storage device 925.

Accordingly, it is possible to efficiently operate the in-vehicle mass storage device 925. Further, it is possible to provide functions as required according to safety requirements for an in-vehicle device.

Meanwhile, after the signal processing device 170mc is reset, the first processor CN1 or the second processor CN2 can operate in one of the following three booting modes: a first booting mode in which booting is performed when the first processor CN1 or the second processor CN2 and the storage device 925 are turned off; a second booting mode in which booting is performed when the first processor CN1 and the storage device 925 are in a standby mode and when the second processor CN2 is turned off; and a third booting mode in which booting is performed when the first processor CN1, the second processor CN2, and the storage device 925 are in a standby mode.

Accordingly, it is possible to efficiently operate the in-vehicle mass storage device 925. Further, it is possible to provide functions as required according to safety requirements for an in-vehicle device.

Referring to FIGS. 8A to 11, the first processor CN1 in the signal processing device 170 according to an embodiment of the present disclosure receives camera data or sensor data from the zonal signal processing device 170Z1, and controls the camera data or the sensor data to be stored in the storage device 925 or processes data (related to vehicle driving) based on the camera data or the sensor data. Accordingly, it is possible to efficiently operate the in-vehicle mass storage device 925.

Meanwhile, the second processor CN2 in the signal processing device 170 according to an embodiment of the present disclosure can control an image based on the camera data from the zonal signal processing device 170Z1 to be displayed on the display 180. Accordingly, it is possible to efficiently operate the in-vehicle mass storage device 925.

It will be apparent that, although the preferred embodiments have been shown and described above, the present disclosure is not limited to the above described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:
a first processor configured to exchange data with an external zonal signal processing device;
a second processor configured to control a display; and
a storage device including a plurality of namespaces,
wherein the first processor is configured to control the zonal signal processing device to access a shared area or a shared namespace using Non-Volatile Memory Express based on Transport Control Protocol (NVMe/TCP).

2. The signal processing device of claim 1, wherein the first processor is configured to operate as a host for accessing the shared area or the shared namespace in the storage device of the zonal signal processing device.

3. The signal processing device of claim 1, wherein the first processor is configured to operate as a host of the NVMe/TCP, and the second processor is configured to operate as a client of the NVMe/TCP.

4. The signal processing device of claim 1, further comprising a Peripheral Component Interconnect (PCI) Express switch connected between the storage device and the first processor or the second processor.

5. The signal processing device of claim 1, wherein the storage device is configured to allocate a portion of the plurality of namespaces as a namespace dedicated to the first processor or the second processor, and to share the shared namespace, which corresponds to another portion of the plurality of namespaces, with the first processor or the second processor or the zonal signal processing device.

6. The signal processing device of claim 1, wherein the storage device is configured to exchange data with the first processor or the second processor through Remote direct memory access (RMDA).

7. The signal processing device of claim 1, wherein the storage device is configured to operate using Non-Volatile Memory express over Fabrics (NVMeoF) based on RDMA over PCI Express.

8. The signal processing device of claim 1, wherein the first processor or the second processor is configured to execute NTB Transport on the PCI Express Bus and to execute Remote direct memory access (RMDA) on the NTB Transport.

9. The signal processing device of claim 1, wherein the first processor or the second processor is configured to execute NTB Transport on the PCI Express Bus and to execute NTB_NETDEV, operating as a synchronization channel for sharing a file object, on the NTB Transport.

10. The signal processing device of claim 1, wherein the first processor or the second processor is configured to execute NTB Transport on the PCI Express Bus and to execute NTB_NETDEV, operating as a synchronization channel for sharing a file object, on the NTB Transport.

11. The signal processing device of claim 1, wherein the first processor or the second processor is configured to:
execute NTB Transport on the PCI Express Bus and respectively execute Remote direct memory access (RMDA) and NTB_NETDEV on the NTB Transport;
transmit camera data, image data, or sensor data through the RMDA; and
transmit control data through the NTB_NETDEV.

12. The signal processing device of claim 1, wherein the storage device comprises:
a plurality of ports for connection to the first processor and the second processor; and
a controller configured to process instructions through each of the plurality of ports.

13. The signal processing device of claim 1, wherein one of the plurality of namespaces in the storage device is configured to store a lock table including a path, name, and lock status of a file object.

14. The signal processing device of claim 13, wherein in response to the lock status being a released status, the storage device is configured to allow access of the first processor or the second processor or the zonal signal processing device.

15. The signal processing device of claim 1, wherein in response to abnormality in operation of an indicator of the storage device or in an active signal of the storage device, the first processor or the second processor is configured to determine whether the operation of the storage device fails, and to reset the storage device upon determining that the operation of the storage device fails.

16. The signal processing device of claim 1, wherein the first processor or the second processor is configured to operate in one of the following:
a first booting mode in which booting is performed when the first processor or the second processor and the storage device are turned off;
a second booting mode in which booting is performed when the first processor and the storage device are in a standby mode and when the second processor is turned off; and
a third booting mode in which booting is performed when the first processor, the second processor, and the storage device are in a standby mode.

17. The signal processing device of claim 1, wherein the first processor is configured to receive camera data or sensor data from the zonal signal processing device, and to store the camera data or the sensor data in the storage device or to perform data processing based on the camera data or the sensor data.

18. A signal processing device comprising:
a first processor configured to exchange data with an external zonal signal processing device;
a second processor configured to control a display; and
a storage device including a plurality of namespaces,
wherein the first processor is configured to operate using Non-Volatile Memory Express based on Transport Control Protocol (NVMe/TCP), and one of the plurality of namespaces in the storage device is configured to store a lock table including a path, name, and lock status of a file object.

19. A signal processing device comprising:
a first processor configured to exchange data with an external zonal signal processing device;
a second processor configured to control a display; and
a storage device including a plurality of namespaces,
wherein the storage device is configured to exchange data with the first processor or the second processor through Remote direct memory access (RMDA), and the first processor is configured to exchange data with the zonal signal processing device using Non-Volatile Memory Express based on Transport Control Protocol (NVMe/TCP).

20. A vehicle control device comprising the signal processing device of any one of claims 1 to 19.
